# EUROPÄISCHE PATENTANMELDUNG

(11) **EP 0 933 313 A2**
(43) Veröffentlichungstag der Anmeldung: **04.08.1999**
(21) Anmeldenummer: 99100299.9
(22) Anmeldetag: 09.01.1999
(51) Int. Cl.: B65D 88/58

(54) **Vorrichtung zum Austrag von Schüttgütern aus siloartigen Behältern**

(30) Priorität: 30.01.1998 DE 19803526
(71) Anmelder: Noell-KRC Energie- und Umwelttechnik GmbH, 04435 Schkeuditz (DE)
(72) Erfinder: Ponto, Hans-Ulrich Dr.-Ing., 97072 Würzburg (DE)
(74) Vertreter: Köckeritz, Günter

(57) **Zusammenfassung**

Vorrichtung zum Austrag von Schüttgütem aus siloartigen Behältern, dadurch gekennzeichnet, daß an der Bodenfläche des Behälters (1) ein Austragsboden angeordnet ist, der aus mindestens einer in der Plattenebene in Richtung des Austrages pendelartig bewegbaren Platte (2) besteht, welche in einem Neigungswinkelbereich von > 0° bis 25° verstellbar ist.

## Beschreibung

Die Erfindung betrifft eine Vorrichtung zum Austrag von Schüttgütern aus siloartigen Behältern, insbesondere aus Hochsilos.

Es sind vielfältigste Austragsvorrichtungen für Schüttgüter bekannt, die vornehmlich für Flachbunker und für LKW - Entladungen entwickelt wurden. Die Verwendung dieser Systeme für Hochsilos ist jedoch aus den nachfolgend genannten Gründen problematisch.
Derartige Austragssysteme sind konstruktiv für wesentlich geringere Belastungen ausgelegt. Eine Anpassung an die hohen Belastungen eines Hochsilos bedeutet (wenn überhaupt möglich) ungerechtfertigt hohe Aufwendungen.
So bestehen z. B. die sogenannten Pendelbodensysteme aus einer Vielzahl gegeneinander verschiebbarer Balken. Während der Förderung verfährt der Boden zunächst geschlossen in Austragsrichtung. Damit wird auch das auf dem Boden liegende Schüttgut bewegt. Danach werden einzelne Balken nacheinander zurückgezogen. Um einen Austrag zu gewährleisten, muß das Schüttgut verharren. Die Kräfte auf das Schüttgut durch die zurückfahrenden Balken müssen somit geringer sein als die Verharrungskräfte aus Massenträgheit und Haftreibung. Sind alle Balken zurückgezogen, beginnt ein neuer Austragstakt.

Durch Räumräder oder mechanisch bewegte Einbauten wird ein Zwangsaustrag bei verschiedensten Systemen erreicht. Auch dafür sind hohe technische Aufwendungen erforderlich. Zudem bewirken diese Zwangsausträge durch die mechanische Krafteinwirkung auf das Schüttgut eine mitunter nicht gewünschte Zerkleinerungswirkung.

Die Aufgabe der vorliegenden Erfindung besteht darin, eine Vorrichtung zum Austrag von Schüttgütern aus siloartigen Behältern, insbesondere aus Hochsilos, zu entwickeln, mit der die o. g. Nachteile solcher Systeme für Hochsilos mit geringem technischen Aufwand überwunden werden können.

Erfindungsgemäß wird diese Aufgabe durch eine Vorrichtung zum Austrag von Schüttgütern aus siloartigen Behältern gelöst, wobei an der Bodenfläche des Behälters ein Austragsboden angeordnet ist, der aus mindestens einer in der Plattenebene in Richtung des Austrages pendelartig bewegbaren Platte besteht, welche einen Neigungswinkelbereich von > 0° bis 25° aufweist.

Nach einem besonderen Merkmal der Erfindung ist die Lagerung der Platte mit Rücksicht darauf, daß hier große nominelle Flächen und nominelle Flächenlasten von 300 kN/m² oder größer auftreten, zweckmäßig als Gleitpaarung ausgeführt. Bei Einsatz von PTFE - Gleitpaarungen kann eine nahezu wartungs- und verschleißfreie Gleitpaarung realisiert werden. Zudem sind in der o. g. Größenordnung auftretende Flächenlasten und bei Bedarf noch deutlich höhere mit einer derartigen Gleitpaarung sicher beherrschbar.

Nach einem bevorzugten Merkmal der Erfindung werden die Platten durch einen Linearantrieb, vorzugsweise durch mindestens einen Hydraulikzylinder, angetrieben. Die Krafteinleitung zur Bewegung der Platte erfolgt nach einem weiteren Merkmal der Erfindung vorzugsweise am Ende der Platte gegenüber dem Austrag oder zentral mittig unterhalb der Platte.

Die erfindungsgemäße Vorrichtung ermöglicht bei einfachster technischer Ausführung ein sicheres Austragen und Dosieren von bunkerfähigen Stoffen aus siloartigen Behältern, insbesondere aus Hochsilos und ist dabei in der Lage, sehr hohe Vertikallasten aufzunehmen.

Hohe mechanische Aufwendungen sind für den Austrag unter einem Hochsilo mittels Pendelplatte nicht erforderlich. Die Platte verfährt in die Endstellung in Richtung Austrag und bewegt das im Bereich des Austrages befindliche Schüttgut nach vorn. Dadurch wird ein Hohlraum geschaffen, der durch nachrutschendes Schüttgut sofort wieder verfüllt wird. Bewegt sich die Pendelplatte zurück, kann sich das nach vorn bewegte Schüttgut nicht zurückbewegen und wird ausgetragen. Der Austrag wird demnach mit wesentlich geringerem technischen Aufwand erreicht.
Die Erfindung soll anhand nachstehender Ausführungsbeispiele näher erläutert werden.
In der Zeichnung zeigen die
- Figur 1:: Seitenansicht eines Hochsilos 1 mit Austragsvorrichtung im Bodenbereich in schematischer Darstellung,
- Figur 2:: Detail aus Figur 1 zur Lagerung der Austragsvorrichtung 2 im Querschnitt,
- Figur 3:: Anordnung der Austragsvorrichtung 2 unter einem nach unten konisch öffnenden Hochsilo 1 in Seitenansicht und schematischer Darstellung,
- Figur 4:: räumliche Darstellung eines Hochsilos mit Austragsvorrichtung.

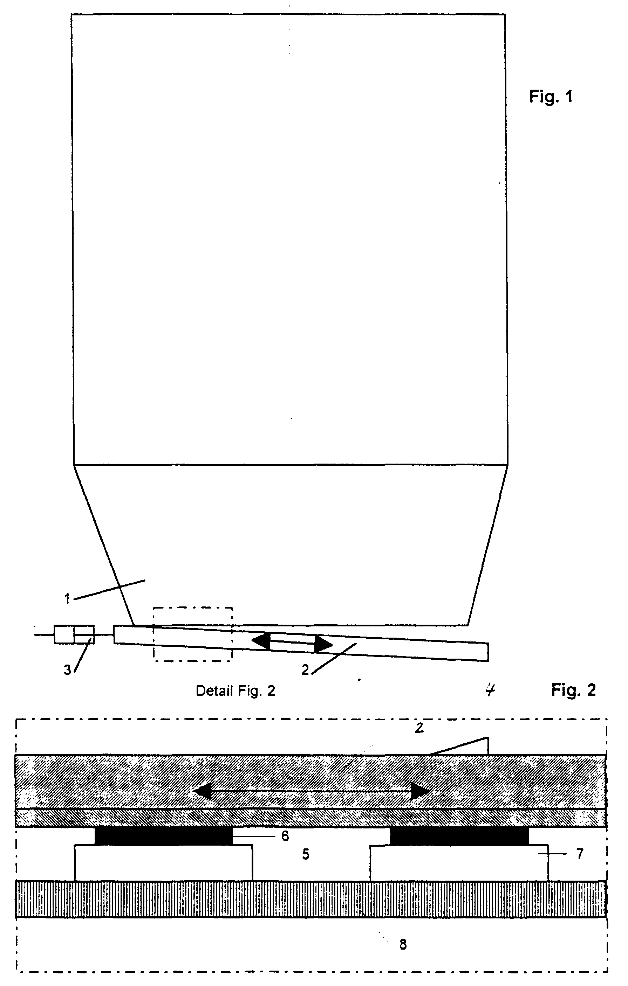

In der Figur 1 ist ein Hochsilo 1 mit zylindrischem Siloschaft und Konus dargestellt. Unterhalb des Silokonus' ist ein ebener, aus mindestens einer Platte 2 bestehender Austragsboden geneigt angeordnet. Der Neigungswinkel ist je nach Art des Schüttgutes in einem Bereich von 0° bis 25° einstellbar. Die Krafteinleitung für die Pendelbewegung efolgt mittels Hydraulikzylinders 3 am Plattenende gegenüber dem Austrag. Die Pendelgeschwindigkeit und die Hublänge sind zweckmäßig dem auszutragenden Schüttgut anzupassen.
Die Figur 2 zeigt eine mögliche Ausführung für die Lagerung der bewegbaren Platte 2. Hier wird die mit dem Bezugszeichen 2 bezeichnete Platte gleitend gelagert. Das Bezugszeichen 5 zeigt eine Edelstahlauflage für die Gleitpaarung. Zweckmäßig kann dies mit PTFE - Gleitpaarungen erfolgen. Der PTFE - Gleitkörper hat das Bezugszeichen 6 und mit 8 ist die Auflageplatte bezeichnet. Die dem Schüttgut zugewandte Seite der Platte kann optional mit geeigneten Austragshilfen 4 versehen sein.

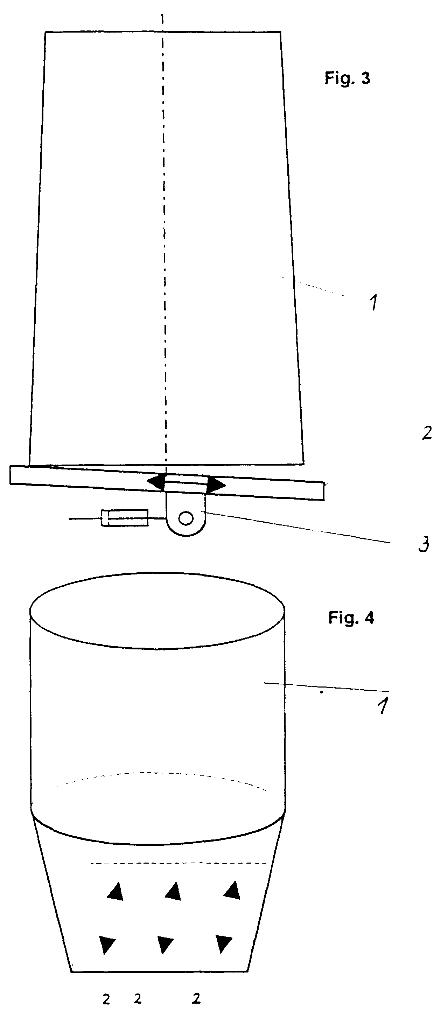

Die Figur 3 zeigt ein Hochsilo 1, welches nach unten konisch öffnend ausgeführt ist. Die am Boden des Silos angeordnete Austragsvorrichtung, welche aus mindestens einer Platte 2 besteht, weist einen Neigungswinkel zwischen 0° und 25°auf. Die Antriebseinheit 3 für die bewegbare Platte 2 ist im vorliegenden Fall mittig angeordnet, so daß die Krafteinleitung zur Bewegung der Platte 2 zentral mittig unterhalb der Platte erfolgt.

Die Figur 4 zeigt eine räumliche Darstellung eines Hochsilos mit Austragsvorrichtung, die aus mehreren nebeneinanderliegenden, den Austragsboden bildenden Platten 2 besteht, wobei diese beim Austragsvorgang in der Plattenebene in Richtung des Austrages eine geschlossene oszillierende Gleitbewegung ausführen.

## Patentansprüche

1. Vorrichtung zum Austrag von Schüttgütern aus siloartigen Behältern, dadurch gekennzeichnet, daß an der Bodenfläche des Behälters (1) ein Austragsboden angeordnet ist, der aus mindestens einer in der Plattenebene in Richtung des Austrages pendelartig bewegbaren Platte (2) besteht, welche in einem Neigungswinkelbereich von > 0° bis 25° verstellbar ist.

2. Vorrichtung nach Anspruch 1, dadurch gekennzeichnet, daß die Lagerung der Platte (2) als Gleitpaarung ausgeführt ist.

3. Vorrichtung nach einem der obigen Ansprüche, dadurch gekennzeichnet, daß die Platte (2) durch einen Linearantrieb (3) geradlinig oszilierend bewegbar ist.

4. Vorrichtung nach Anspruch 3, dadurch gekennzeichnet, daß der Linearantrieb mindestens ein Hydraulikzylinder ist.

5. Vorrichtung nach einem der obigen Ansprüche, dadurch gekennzeichnet, daß die Krafteinleitung zur Bewegung der Platte (2) am Ende der Platte gegenüber dem Austrag oder unterhalb der Platte erfolgt.
